# EUROPÄISCHE PATENTSCHRIFT

(11) **EP 0 710 198 B1**
(45) Veröffentlichungstag und Bekanntmachung des Hinweises auf die Patenterteilung: **25.03.1998**
(21) Anmeldenummer: 94925367.8
(22) Anmeldetag: 20.07.1994
(51) Int. Cl.: B60T 8/36

(54) **ELEKTROHYDRAULISCHE DRUCKREGELVORRICHTUNG**
ELECTROHYDRAULIC PRESSURE REGULATING DEVICE
DISPOSITIF ELECTROHYDRAULIQUE DE REGULATION DE LA PRESSION

(30) Priorität: 29.07.1993 DE 4325410
(43) Veröffentlichungstag der Anmeldung: 08.05.1996
(73) Patentinhaber: ITT Automotive Europe GmbH, 60488 Frankfurt am Main (DE)
(72) Erfinder: REINARTZ, Hans-Dieter, D-60439 Frankfurt am Main (DE); DINKEL, Dieter, D-65817 Eppstein (DE); STEFFES, Helmut, D-65795 Hattersheim (DE)
(86) Internationale Anmeldenummer: EP9402379
(87) Internationale Veröffentlichungsnummer: WO9503960

(56) Entgegenhaltungen:
- EP-A- 0 499 670
- WO-A-89/05746
- WO-A-92/12878
- DE-A- 3 725 385

## Beschreibung

Die Erfindung betrifft eine elektrohydraulische Druckregelvorrichtung, insbesondere Bremsdruckregelvorrichtung nach dem Oberbegriff des Anspruchs 1.

Eine elektrohydraulische Druckregelvorrichtung der gattungsbildenden Art wird beispielhaft in der internationalen Veröffentlichung WO 92/12878 beschrieben, wonach über die bereits hinreichend bekannte Blockbauweise des Ventilaufnahmekörpers hinaus der Deckel mittels eines plattenförmigen Trägerelementes unterteilt ist, um einerseits einen elektronischen Regler oder Teile eines elektronischen Reglers aufzunehmen, andererseits die elektrische Verbindung zwischen dem elektronischen Regler und den an den Elektromagnetventilen überstehenden Kontaktelementen herzustellen. Der Deckel ist mit den Spulen der Elektromagnetventile auf die Ventildome des Ventilaufnahmekörpers aufgesteckt, wobei zur Herstellung des elektrischen Anschlusses zwischen den Kontaktelementen und den im Deckel integrierten elektronischen bzw. elektrischen Komponenten Steckkontakte ineinander greifen. Zur Befestigung der Spulen am Trägerelement wird vorgeschlagen, elastische Halterungen, beispielsweise Federn zu verwenden oder die Spulen in einem elastischen Formkörper einzubetten. Insbesondere die Verwendung eines Formkörpers ist im Hinblick auf die erforderlichen Eigenschaften bisher schwierig zu handhaben.

Es ist die Aufgabe der Erfindung, die aus dem genannten Stand der Technik bekannte Druckregelvorrichtung zu verbessern, um eine einfache Spulenpositionierung, eine kompakt- sowie funktionsoptimierte Anordnung der Spulen auf dem Ventilaufnahmekörper zu schaffen, die möglichst einfach herzustellen und zu prüfen ist, wobei unterschiedliche Wärmedehnungen der Bauteile sowie Bauteiltoleranzen möglichst spannungsfrei aufgenommen werden sollen.

Die Aufgabe wird erfindungsgemäß durch die kennzeichnenden Merkmale des Patentanspruchs 1 gelöst.

Weitere Merkmale, Vorteile und Anwendungsmöglichkeiten gehen aus der folgenden Darstellung zweier Ausführungsbeispiele hervor.

Es zeigen:
- Figur 1: einen Längsschnitt durch die erfindungsgmäße Druckregelvorrichtung,
- Figur 2: eine Draufsicht auf die in Figur 1 dargestellte Druckregelvorrichtung.

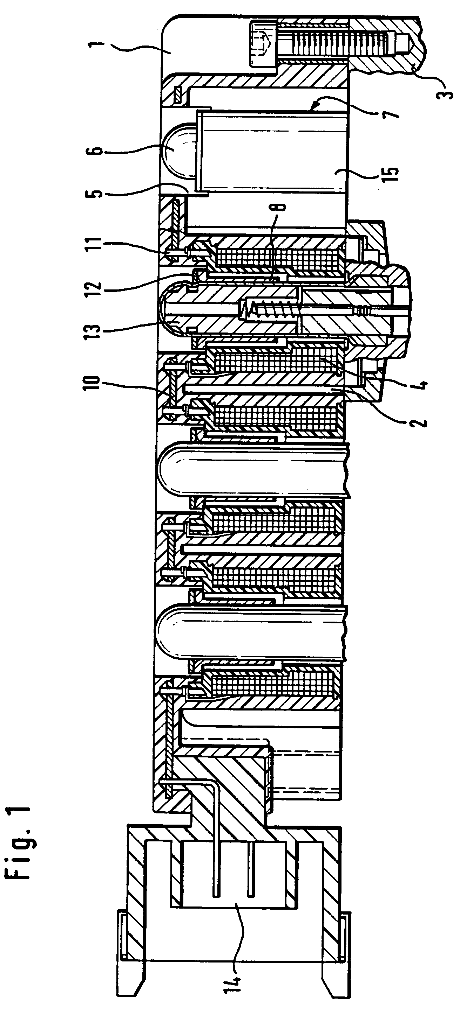

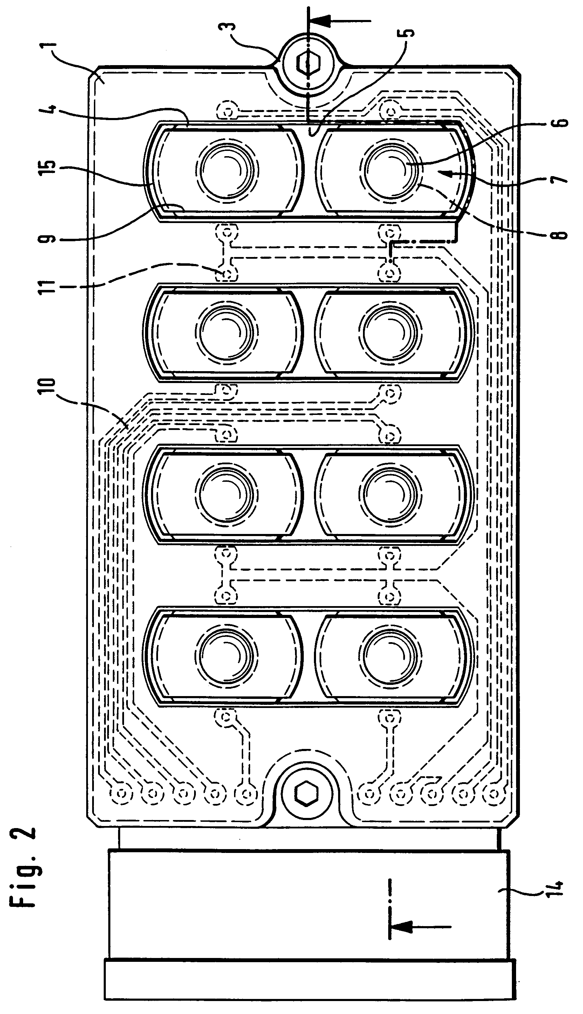

Die Figur 1 zeigt eine Seitenansicht der erfindungsgemäßen Druckregelvorrichtung mit einer Skizzierung der Grundkomponenten. Der abbildungsgemäße Längsschnitt verläuft entlang der Ventildomachse einer Ventilreihe, wobei zur Verdeutlichung des Spulenmantels 7 die Schnittebene im Bereich des in der Abbildung gezeigten äußeren rechten Elektromagnetventils außerhalb der Ventildomachse durch den Formkörper gelegt ist (vergleiche hierzu auch nachfolgend Figur 2). Der auf dem Ventilaufnahmekörper 3 aufgeschraubte Formkörper 1 besteht aus zähem Kunststoff, welcher in einer Vorrichtung um die Spulen 4 gespritzt bzw. vergossen wird, sobald die Leiterbahnen 10 bzw. die Leiterplatte mit den an den Spulen 4 überstehenden Kontaktelementen 11 verlötet sind. Die Leiterbahnen 10 und die Spulen 4 sind somit durch den Kunststoff des Formteils und den Kunststoffmantel der Spule geschützt. Zur Aufnahme der Ventildome 6 sind im Formkörper 1 großzügig dimensionierte Durchgangsöffnungen 5 vorgesehen, die zwischen dem Formkörper 1 und den Ventildomen 6 einen ausreichend großen radialen Toleranzausgleich ermöglichen, so daß der die Spulen 4 aufnehmende Formkörper 1 spielbehaftet über die Ventildome 6 gestülpt und auf den Ventilaufnahmekörper 3 aufgelegt ist. Die Durchgangsöffnungen 5 im Formkörper 1 sind derart dimensioniert, daß schließlich auch noch der Spulenmantel 7 gegenüber den Spulen 4 spielbehaftet auf die Ventildome 6 aufgeschoben und beispielsweise mittels eines Greifrings 12 gesichert werden kann. Der Spulenmantel 7 braucht hierzu nicht eine geschlossene Mantelfläche aufzuweisen, sondern ist mit seitlichen Aussparungen 9 versehen, die dem Spulenmantel 7 als U-Schenkel ausgeführt ein weitgehend offenes Profil verleihen. Im Kontaktbereich des Ventildoms 6 weist der Spulenmantel 7 die Form einer Hülse 8 auf, die die Funktion eines Jochrings übernimmt. Der Magnetkreis der Spule 4 ist somit nach der Montage des Formkörpers 1 und des Spulenmantels 7 auf dem Ventilaufnahmekörper 3 über den Magnetkern 13 im Ventildom 6 geschlossen. Aus Gründen der Material- und Gewichtsersparnis erweisen sich die Hohlräume 2 und Durchgangsöffnungen 5 im Formkörper 1 als zweckmäßig und überbrücken die zwischen dem Ventilaufnahmekörper 3 und dem Formkörper 1 bestehenden Bauteiltoleranzen sowohl mechanisch wie auch thermisch spannungsfrei. Jeder Spulenmantel 7 der Druckregelvorrichtung ist lediglich durch den zugehörigen Ventildom 6 geführt und weist gegenüber den Spulen 4 und dem Formkörper 1 ausreichendes Radialspiel auf, so daß jederzeit unabhängig von Bauteiltoleranzen eine Spulenpositionierung auf dem Ventilaufnahmekörper 3 gewährleistet ist. In Figur 1 ist der Steckanschluß 14 mit dem Formkörper 1 eingespritzt bzw. eingegossen, wodurch eine relativ einfache elektrische Anschlußmöglichkeit zur Peripherie gegeben ist.

Die Figur 2 zeigt eine Draufsicht auf die Druckregelvorrichtung, die den Formkörper 1 und Teile der Elektromagnetventile nach der Endmontage auf den Ventilaufnahmekörper 3 erkennen lassen. Die im Formkörper 1 eingebetteten Leiterbahnen 10 sind strichliniiert in Figur 2 angedeutet. Es handelt sich hierbei um eine Druckregelvorrichtung mit acht Elektromagnetventilen, die in zwei Viererreihen aufgeteilt sind. Bei der in Figur 1 im Längsschnitt gezeigten Magnetventilreihe handelt es sich um in der elektromagnetisch nicht erregten Grundstellung geschlossene Hydraulikventile, die der in Figur 2 durch die Schnittlinie gekennzeichneten Ventilreihe entsprechen. Bei der gegenüberliegenden Ventilreihe handelt es sich um in der elektromagnetisch nicht erregten Grundstellung offen geschaltete Hydraulikventile. Die Gesamtheit aller abbildungsgemäßen Hydraulikventile ist über mehrere in der Zeichnung nicht explizit ausgeführte hydraulische Hauptdruck- und Rücklaufleitungen mit den Radbremsen und dem Bremsdruckgeber einer schlupfgeregelten Bremsanlage verbindbar. Gut zu erkennen sind in Figur 2 die relativ großzügig gestalteten, langlochförmigen Durchgangsöffnungen 5 im Formkörper 1 sowie die sich über die Ventildome 6 und Spulen 4 erstreckenden Spulenmäntel 7, mit ihren in der Draufsicht als über den jeweiligen Spulenumfang symmetrisch verteilte Abplattungen, die den Aussparungen 9 entsprechen, so daß die Vergußmasse der Spulen 4 in den Durchgangsöffnungen 5 ersichtlich ist. Die Vergußmasse der Spulen 4 ist abschnittsweise vom Material des Formkörpers 1 eingeschlossen. Ferner ist in der Draufsicht die strichliniierte Wandstärke der den Jochring bildenden Hülse 8 zu erkennen, die sich als einstückige Verbindung mit dem aus Stahl gefertigen Spulenmantel 7 entlang der Ventildomwandung erstreckt. Gleichfalls strichliniiert ist die Wandstärke der Gabel- bzw. U-förmig abgekröpften Schenkeln 15 des Spulenmantels 7 zu erkennen.

Zusammenfassend läßt sich festhalten, daß durch die Erfindung der Bedarf an Vergußmasse bzw. Isolierstoff auf ein Minimum begrenzt wird, so daß gegenüber dem Stand der Technik kein mengenmäßig aufwendiges Umspritzen bzw. Umgießen der Spulen 4 erforderlich ist. Reinigungs- und Entformungsprobleme sind folglich gleichfalls auf ein Minimum während der Herstellung beschränkt. Der Formkörper 1 bildet mit dem Isolierstoff der Spulen 4 eine einfache herzustellende Einheit, wobei die Spulen 4 über den Isolierstoff eine feste Verbindung mit dem Formkörper 1 aufweisen. Die Kontaktelemente 11 an den Leiterbahnen 10 sind innerhalb des Formkörpers 1 eingebettet. Durch die Verwendung von einfach herzustellenden Spulenummantelungen, die nach der Montage des Formkörpers 1 auf dem Ventilaufnahmekörper 3 auf verblüffend einfache Weise in die Durchgangsbohrungen 5 und damit auf die Ventildome 6 gesteckt werden, ist jederzeit von Bauteiltoleranzen unabhängige Anordnung der Spulen 4 an den Ventildomen 6 erreicht und der

Magnetkreis geschlossen. Der horizontale und vertikale Abstand der Spulen 4 gegenüber den Ventildomen 6 kann großzügig bemessen werden, was den Montagevorgang der elektrischen Baugruppe auf dem Ventilaufnahmekörper 3 erheblich erleichtert.

### Bezugszeichenliste

- 1: Formkörper
- 2: Hohlraum
- 3: Ventilaufnahmekörper
- 4: Spule
- 5: Durchgangsöffnung
- 6: Ventildom
- 7: Spulenmantel
- 8: Hülse
- 9: Aussparung
- 10: Leiterbahn
- 11: Kontaktelemente
- 12: Greifring
- 13: Magnetkern
- 14: Steckeranschluß
- 15: Schenkel

## Patentansprüche

1. Elektrohydraulische Druckregelvorrichtung, insbesondere Bremsdruckregelvorrichtung, wie Antiblockierregelvorrichtung, Antriebsschlupfregelvorrichtung, mit elektromagnetisch betätigbaren Hydraulikventilen, die an einem Ventilaufnahmekörper (3) angeordnet sind, mit am Ventilaufnahmekörper (3) angebrachten Ventildomen (6), welche in mehrere Spulen (4) aufgenommen sind, die an ihren den Ventilaufnahmekörper (3) überragenden Teilen mit elektrischen Kontaktelementen (11) versehen sind, mit einem Formkörper (1), der die Spulen (4) und die Kontaktelemente (11) aufnimmt, wobei der Formkörper (1) oder ein Teil des Formkörpers (1) für die Aufnahme eines elektronischen Reglers oder für die Aufnahme von Anschlußteilen für einen elektronischen Regler geeignet ist und wobei der Formkörper (1) mit Hohlräumen (2) versehen ist, die von einer Auflagefläche des Formkörpers (1) am Ventilaufnahmekörper (3) bis zur dem Ventilaufnahmekörper (3) abgewandten Außenfläche am Formkörper (1) reichen, dadurch **gekennzeichnet**, daß die Hohlräume (2) an den Aufnahmestellen der Spulen (4) als Durchgangsöffnungen (5) ausgebildet sind, die größer sind als der Außendurchmesser der Ventildome (6).

2. Elektrohydraulische Druckregelvorrichtung nach Anspruch 1, dadurch **gekennzeichnet**, daß in jeder Durchgangsöffnung (5) ein Spulenmantel (7) eingebracht ist, der an den Ventildomen (6) form- und/oder kraftschlüssig gehalten ist.

3. Elektrohydraulische Druckregelvorrichtung nach Anspruch 2, dadurch **gekennzeichnet**, daß der Spulenmantel (7) auf der dem Ventilaufnahmekörper (3) abgewandten Stirnseite vom Außenbereich der Spule (4) zum Innenbereich der Spule (4) in die Form einer Hülse (8) übergeht, die im Übergangsbereich an der Stirnfläche der Spule (4) und im Innenbereich am Ventildom (6) anlegbar ist.

4. Elektrohydraulische Druckregelvorrichtung nach Anspruch 2, dadurch **gekennzeichnet**, daß der Spulenmantel (7) entlang seiner Umfangsfläche partielle Aussparungen (9) hat, die vorzugsweise den Spulenmantel (7) mit einem U-Profil versehen.

5. Elektrohydraulische Druckregelvorrichtung nach Anspruch 4, dadurch **gekennzeichnet**, daß sich jeweils ein zwischen den Aussparungen (9) befindlicher Schenkel (15) des Spulenmantels (7) bis auf den Ventilaufnahmekörper (3) erstreckt.

6. Elektrohydraulische Druckregelvorrichtung nach mindestens einem der vorhergehenden Ansprüche, dadurch **gekennzeichnet**, daß der Formkörper (1) zwischen den einander benachbarten Spulen (4) jeweils einen Hohlraum (2) aufweist, der sich von der Auflagefläche des Formkörpers (1) am Ventilaufnahmekörper (3) bis zu einer im Formkörper (1) eingebetteten Leiterbahn (10) beabstandet erstreckt.

7. Elektrohydraulische Druckregelvorrichtung nach Anspruch 5, dadurch **gekennzeichnet**, daß die Spulen (4) über ihren Umfang partiell vom Material des Formkörpers (1) umschlossen sind, und daß die vom Material des Formkörpers (1) ausgenommenen Abschnitte der Spulen (4) die Durchgangsöffnungen (5) bilden, welche den Schenkel (15) des Spulenmantels (7) und die Hülse (8) aufnehmen.

## Claims

1. Electrohydraulic control device, more specifically brake pressure control device, such as anti-lock control device and traction slip control device, including electromagnetically controllable hydraulic valves which are arranged on a valve-accommodating member (3), valve domes (6) mounted on the valve-accommodating member (3) which are incorporated in a plurality of coils (4) having electric contact elements (11) on their parts overhanging the valve-accommodating member (3), a moulding box (1) accommodating the coils (4) and the contact elements (11), and the moulding box (1) or part of the moulding box (1) being adapted for the accommodation of an electronic controller or for the accommodation of terminals for an electronic controller, and the moulding box (1) including cavities (2) which extend from the surface of abutment of the moulding box (1) on the valve-accommodating member (3) to the outer surface of the moulding box (1) remote from the valve-accommodating member (3),
**characterized** in that the cavities (2), at the points of accommodation on the coils (4), are configured as lead-through openings (5) having a width larger than the outside diameter of the valve domes (6).

2. Electrohydraulic pressure control device as claimed in claim 1,
**characterized** in that each lead-through opening (5) contains a coil casing (7) which is retained on the valve domes (6) in positive and/or operative engagement.

3. Electrohydraulic pressure control device as claimed in claim 2,
**characterized** in that, on the front end remote from the valve-accommodating member (3), the coil casing (7) will take on the form of a bush (8) extending from the outside area of the coil (4) to the inside area of the coil (4), and the bush is movable into abutment with the front end of the coil (4) in the transitional area and with the valve dome (6) in the inside area.

4. Electrohydraulic pressure control device as claimed in claim 2,
**characterized** in that the coil casing (7), along its circumferential surface, has partial recesses (9) which preferably accord the coil casing (7) a U-shaped profile.

5. Electrohydraulic pressure control device as claimed in claim 4,
**characterized** in that a leg (15) of coil casing (7) respectively disposed between the recesses (9) extends to the valve-accommodating member (3).

6. Electrohydraulic pressure control device as claimed in at least one of the preceding claims,
**characterized** in that the moulding box (1) between the adjacent coils (4) includes a cavity (2) which extends from the abutment surface of the moulding box (1) on the valve-accommodating member (3) to a strip conductor (10) embedded in the moulding box (1) at a distance therefrom.

7. Electrohydraulic pressure control device as claimed in claim 5,
**characterized** in that the coils (4) are partially enclosed over their circumference by the material of the moulding box (1), and in that the sections of the coils (4) which are not covered by the material of the moulding box (1) provide the lead-through openings (5) which accept the leg (15) of the coil casing (7) and the bush (8).

## Revendications

1. Dispositif électro-hydraulique de régulation de pression, notamment dispositif de régulation de pression de freinage, tel que dispositif de régulation antiblocage, dispositif de régulation de glissement de traction, comprenant des valves hydrauliques à actionnement électromagnétique, qui sont disposées sur un corps de logement de valves (3), des dômes de valve (6) montés sur le corps de logement de valves (3), qui sont reçus dans plusieurs bobines (4), qui sont pourvues d'éléments de contact électrique (11) à l'endroit de leurs parties en saillie par rapport au corps de logement de valves (3), et un corps moulé (1) qui sert à loger les bobines (4) et les éléments de contact (11), le corps moulé (1) ou une partie du corps moulé (1) étant adapté pour loger un régulateur électronique ou pour loger des éléments de raccordement pour un régulateur électronique et le corps moulé (1) étant pourvu de cavités (2) qui s'étendent d'une surface d'appui du corps moule (1) sur le corps de logement de valves (3) jusqu'à la surface extérieure du corps moulé (1) située à l'opposé du corps de logement de valves (3), caractérisé en ce que les cavités (2) sont réalisées, aux emplacements de logement des bobines (4), sous forme d'ouvertures traversantes (5) qui sont plus grandes que le diamètre extérieur des dômes de valve (6).

2. Dispositif électro-hydraulique de régulation de pression suivant la revendication 1, caractérisé en ce qu'une enveloppe de bobine (7) est placée dans chaque ouverture traversante (5), cette enveloppe de bobine (7) étant maintenue sur les dômes de valve (6) par complémentarité de formes et/ou par application de force.

3. Dispositif électro-hydraulique de régulation de pression suivant la revendication 2, caractérisé en ce que, du côté frontal situé à l'opposé du corps de logement de valves (3), l'enveloppe de bobine (7) se prolonge, de la zone extérieure de la bobine (4) à la zone intérieure de la bobine (4), sous la forme d'un manchon (8) qui peut être appliqué dans la zone de transition sur la surface frontale de la bobine (4) et dans la zone intérieure sur le dôme de valve (6).

4. Dispositif électro-hydraulique de régulation de pression suivant la revendication 2, caractérisé en ce que, le long de sa surface périphérique, l'enveloppe de bobine (7) comporte des évidements partiels (9) qui confèrent de préférence une forme profilée en U à l'enveloppe de bobine (7).

5. Dispositif électro-hydraulique de régulation de pression suivant la revendication 4, caractérisé en ce que, pour chaque paire d'évidements (9), une aile (15) (15) respective de l'enveloppe de bobine (7) qui est située entre les évidements (9) s'étend jusqu'au corps de logement de valves (3).

6. Dispositif électro-hydraulique de régulation de pression suivant au moins l'une des revendications précédentes, caractérisé en ce que, pour chaque paire de bobines (4) voisines l'une de l'autre, le corps moulé (1) comporte une cavité (2) respective qui s'étend, en étant espacée, de la surface d'appui du corps moulé (1) sur le corps de logement de valves (3) jusqu'à une piste conductrice (10) noyée dans le corps moulé (1).

7. Dispositif électro-hydraulique de régulation de pression suivant la revendication 5, caractérisé en ce que, sur leur périphérie, les bobines (4) sont enfermées partiellement par la matière du corps moulé (1) et en ce que les sections des bobines (4) épargnées par la matière du corps moulé (1) constituent les ouvertures traversantes (5) qui servent à loger les ailes (15) de l'enveloppe de bobine (7) et le manchon (8).
